(19) Europäisches Patentamt
European Patent Office
Office européen des brevets

(11) **EP 1 632 787 A1**

(12) **EUROPEAN PATENT APPLICATION**

(43) Date of publication:
08.03.2006 Bulletin 2006/10

(51) Int Cl.:
*G01S 5/14* (2006.01)    *A01K 15/02* (2006.01)

(21) Application number: 05019126.1

(22) Date of filing: 02.09.2005

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: 02.09.2004 US 606523 P

(71) Applicant: **International Microtech Corporation Miami FL 33166 (US)**

(72) Inventors:
• **Talamas, Elie**
  **Miami, FL 33186 (US)**
• **Bianco, Frank**
  **Miami, FL 33026-1403 (US)**

(74) Representative: **Bohnenberger, Johannes et al Meissner, Bolte & Partner GbR, Postfach 86 06 24 81633 München (DE)**

(54) **Virtual fence**

(57)    The present invention describes a method and apparatus that prevents a body from crossing a virtual barrier. Satellite signals provide the definition of the region and the location of the body within the region. In addition, signaling means can be incorporated into the apparatus to enable the user to give commands to the body, to reinforce those commands through stimuli, to transmit bidirectional location signals, and to interface with the user through visual and audible displays. The apparatus includes: a GPS module, a microcomputer, key switches, a display, audible indicator, and a battery. The activation of the key switches can store the location of the vertices of the region, the location of the body, test and command of the stimuli, activate visual and audible displays, and automatically track the body's movement. The apparatus can be set to signal and stimulate the body to deter it from crossing the virtual barrier.

FIG. 1

**Description**

CROSS-REFERENCE TO RELATED APPLICATIONS

The present application claims priority from U.S. Patent Provisional Application No. 60/606,523, filed September 2, 2004, the contents of which are herein incorporated by reference in their entirety.

BACKGROUND OF THE INVENTION

1. Field of the Invention

The present invention relates to a method and apparatus, which is used instead of a physical fence, to prevent a body from entering or leaving a barrier region, to signal a body within or exteriorly of the barrier region, and to control the barrier region.

2. Detailed Description of the Relevant Art

At times, it is necessary to keep a physical body within a barrier region — whether that body is a person, an animal, machinery, or vehicles. In particular, animal owners, whether the animal is a pet, farm animal, protected animal, or working animal, generally have a need to fence in, or fence out, an animal for the safety of that animal, other animals, or for the safety of surrounding persons, or perhaps, simply for owner convenience.

Prior art devices of this type are designed to track, for example, a dog, via radio frequency (RF) and global positioning system (GPS) signals. One such device alleges relaying data on a dog's position, via GSM signals, to the dog owner.

However, the prior art does not address the need to generate a virtual fence to deter an animal, and to provide stimuli for preventing the animal from leaving or entering an area. More specifically, the prior art does not have any method or apparatus to generate a polygonal virtual fence, to locate the animal relative to the virtual boundary or boundaries, and to keep the animal within these boundaries.

Thus, a method and apparatus which can provide such a virtual fence, and the control of such a fence, as well as means to stimulate a body within or exteriorly the virtual fence to move in a desired direction, is needed.

SUMMARY OF THE INVENTION

The present invention relates to a method and apparatus of providing a virtual region, determining the location of a body within the region or boundary, and providing a signaling device to enable a user to signal the body for any one of a variety of reasons, and to remotely control the activity of the virtual region. Although using the present apparatus on animals is contemplated, the invention can also be used to track and prevent persons, such as prisoners, or machinery or vehicles from crossing a boundary region.

Accordingly, in one embodiment consistent with the present invention, a virtual fence is designed to prevent a body from crossing a virtual barrier. The electronic apparatus includes a Global Positioning System (GPS) module which acquires GPS satellite signals to provide the definition of the barrier and the location of the body within the barrier, a microcomputer, key switches on the apparatus, a display, an audible indicator, and a battery which are all connected electrically to each other.

The apparatus is portable and is typically mounted on the body. The activation of the key switches or buttons are used to store the location of the vertices of the barrier(s), the location(s) of the body, test and command of the stimuli, activate visual and audible displays, and automatically track the body's movement. In addition, signaling means can be incorporated into the apparatus to enable the user to give commands to the body (i.e., to move for reasons such as feeding, safety, night-time, day-time, birth, playtime, etc.), to reinforce those commands through issuing stimuli, to transmit bidirectional location signals, and to interface with the user through visual and audible displays.

In one embodiment consistent with the present invention, an apparatus to track a body within a region, includes a GPS module which acquires location information on the body; and a controller which compares the location information for the body with predetermined information on the region, to determine a position of the body within the region.

The apparatus may further include a display which shows the navigational and control information (e.g., location in spherical coordinates), an audio component, an LED which shows a status of the apparatus, and a mechanism for producing a stimulus.

In one embodiment consistent with the present invention, the mechanism includes a high voltage shock module; and at least one electrode. The stimulus may include at least one of a compression wave energy, electronic energy, and audio signal.

In another embodiment consistent with the present invention, the apparatus further includes means for keeping the body within the region.

The apparatus may include communication connections from at least one of internet and wireless.

In yet another embodiment consistent with the present invention, tracking of the body is performed using a spherical coordinate system derived from GPS signals serially transmitted by the GPS module.

In yet another embodiment consistent with the present invention, the region is determined by using an algorithm which utilizes one of a square and a rectangular perimeter, and storing the GPS coordinates of the four vertices of each one of the square and the rectangle.

In yet another embodiment consistent with the present invention, tracking of the body is performed using a circular boundary.

In yet another embodiment consistent with the present invention, the GPS module receives continuous signal data to analyze whether the body is within the region. A latitude and a longitude describing a location and obtained from the GPS signals serially transmitted from the GPS module, are compared with stored signal location data of the region, to determine whether the body is within tor exterior of he region. The body is determined to be within a region when the latitude which describes an instantaneous location of the body is within the two latitudes which set the vertices of the region. Further, the body is determined to be within a region when the longitude which describes an instantaneous location of the body is within two longitudes which set the vertices of the region.

In yet another embodiment consistent with the present invention, the controller determines an optimal time to apply said stimulus, and a strength and duration of the stimulus.

In yet another embodiment consistent with the present invention, the apparatus may also include RF transmitter means; and receiver/transmitter means.

In yet another embodiment consistent with the present invention, a method of tracking a body within a region, includes acquiring a plurality of GPS data signals using a GPS module; obtaining coordinate points from the GPS data signals; determining a region based on the coordinate points; acquiring instantaneous GPS data signals on the body; and determining from a comparison of the body's GPS data signals and the region's coordinate points, whether the body is within or exterior of he region. Acquiring the plurality of GPS data signals requires locking onto a plurality of satellite signals, and storing the coordinate points from the plurality of GPS signals, in a memory. The coordinates can not be less than a resolution of said GPS module.

In yet another embodiment consistent with the present invention, the method includes applying a warning stimulus to the body when the body is approaching ta barrier region, and applying a stimulus to the body when the body is determined to not be within the region.

In yet another embodiment consistent with the present invention, the determining step includes a user following a consistent path to generate at least one of a square and a rectangular region having four vertices each. The method further includes calculating a distance between the body being tracked and each of the vertices of a region, to determine whether the body is within a region. Specifically, a latitude and a longitude from the GPS signals and sertially transmitted by the GPS module are compared with stored signal data of the region, to determine whether the body is within the region. Further, the body is determined to be within a region when the latitude which describes an instantaneous location of the body is within the two latitudes which set the vertices of the region. Still further, the body is determined to be within a region when the longitude which describes an instantaneous location of the body is within two longitudes which set the vertices of the region.

There has thus been outlined, some features consistent with the present invention in order that the detailed description thereof that follows may be better understood, and in order that the present contribution to the art may be better appreciated. There are, of course, additional features consistent with the present invention that will be described below and which will form the subject matter of the claims appended hereto.

In this respect, before explaining at least one embodiment consistent with the present invention in detail, it is to be understood that the invention is not limited in its application to the details of construction and to the arrangements of the components set forth in the following description or illustrated in the drawings. Methods and apparatuses consistent with the present invention are capable of other embodiments and of being practiced and carried out in various ways. Also, it is to be understood that the phraseology and terminology employed herein, as well as the abstract included below, are for the purpose of description and should not be regarded as limiting.

As such, those skilled in the art will appreciate that the conception upon which this disclosure is based may readily be utilized as a basis for the designing of other structures, methods and systems for carrying out the several purposes of the present invention. It is important, therefore, that the claims be regarded as including such equivalent constructions insofar as they do not depart from the spirit and scope of the methods and apparatuses consistent with the present invention.

BRIEF DESCRIPTION OF THE DRAWINGS

FIG. 1 is a schematic diagram of the major components of the apparatus according to one embodiment consistent with the present invention.

FIG. 2A is a top view of one embodiment of the apparatus consistent with the present invention.

FIG. 2B is a cross-sectional view taken at line A-A of FIG. 2A.

FIG. 3 is a flow chart of one method of operation consistent with one embodiment of the present invention.

DETAILED DESCRIPTION OF THE INVENTION

The present invention relates to a method and apparatus which is used instead of a physical fence, to prevent a body from entering or leaving a barrier region, to signal a body within the barrier region, and to control the barrier region. Although the present invention will be described with respect to using such a virtual fence in preventing animals from entering or leaving a barrier region, it would be clear to one of ordinary skill in the art that this invention could be adapted to be used with respect to other bodies, such as tracking and preventing persons, such as prisoners, or machinery (robotic, for example), or vehicles, from leaving the barrier region.

In one embodiment consistent with the present invention, the virtual fence apparatus is preferably portable and self-contained.

In another embodiment, the apparatus can be operated or programmed using a separate device, such that the apparatus can be further minimized for weight, shape and size considerations. In that event, the programming device can be of any shape and size for the convenience of the user.

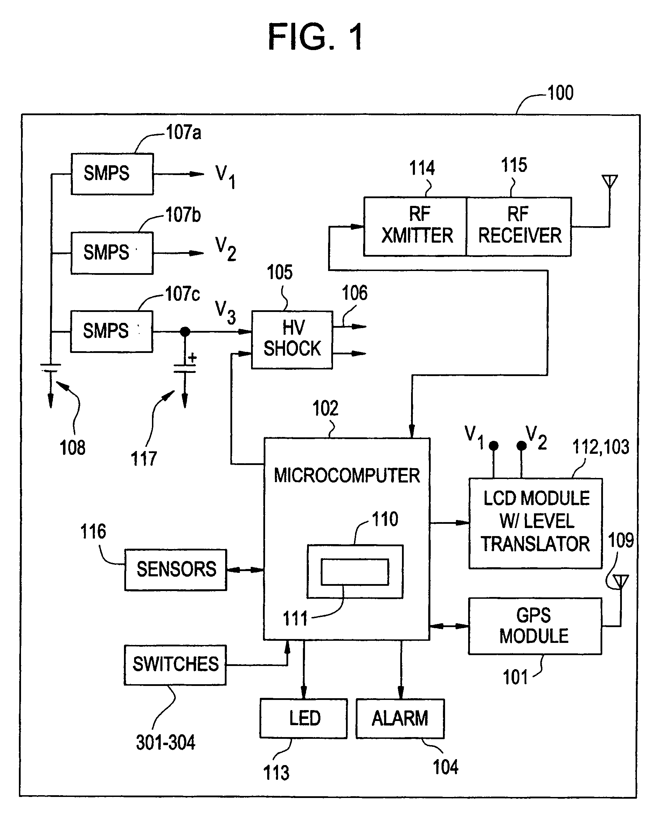

With respect to the first embodiment, the present invention may be provided in an apparatus 100 (see FIG. 1) which includes a self-contained electronic system. The apparatus 100 may include a GPS, or GPS equivalent system, chipset or module 101, a PC Board 117 containing one or more computer chips 102, a visual display 103, audio-producing component 104, and electro-mechanical components 105 which are used to provide a stimulus via a stimulating means 106.

For example, when used with animals, the present invention may be a collar which includes a GPS module which determines the body's position within a boundary zone. The collar or other device may be fitted on the body and the device may be programmed to run automatically and display whether the body's GPS location is inside or outside one of a plurality of zones. In one embodiment, the apparatus continuously processes the GPS data and determines the optimum time to apply a stimulus which will deter the body from entering or leaving a zone.

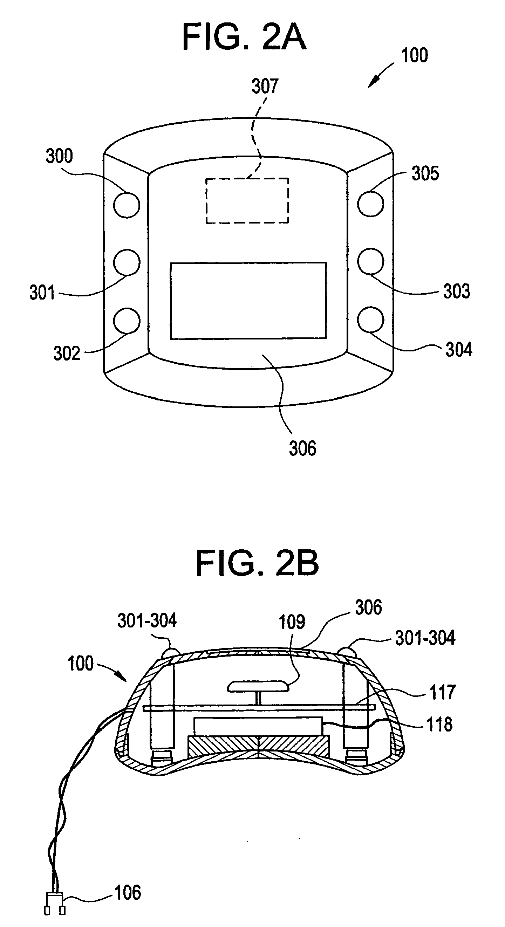

More specifically, in one embodiment consistent with the present invention, the apparatus 100 (see FIG. 1) may include a plurality of (i.e., three) power supplies 107, a microcontroller 102, an optional liquid crystal display (LCD) 103, a piezo alarm 104, a GPS module 101, a high-voltage shock module 105, a plurality of switches 300-305 (see FIGS. 2A and 2B), and a rechargeable battery 108.

The design of the present invention takes advantage of the capacity of Li ion batteries and uses one Li-ion battery 108. In one embodiment, the usable battery range is from 4.2 volts to 2.8 volts, and the nominal battery voltage is 3.7 volts. The battery 108 may be protected by a safety circuit which acts as an electronic switch which opens if the charging voltage is exceeded or if an excess of current is drawn from the battery 108 or the temperature range of the battery is exceeded.

In one embodiment, the primary switch mode power supply 107a is a buck converter and provides a 3.0 volt supply for the 8-bit microcontroller 102, LCD 103, and GPS module 101. In one embodiment, the second switch-mode-power-supply 107b is a boost converter which provides 5 volts to drive and bias the LCD 103. Further, in one embodiment, the third power supply 107c is a switch mode power supply, and is a boost converter and provides a programmable output from 4.8 to 12 volts.

In one example, the high-voltage shock module 105 which provides a stimulus to the body, includes a transformer connected to a logic level MOSFET low side switch. The output of this module is connected to two electrodes 106 and provides the stimulus to the body using burst-transmission mode.

In one embodiment, the switch-mode-power supply 107c is a boost converter with a programmable output voltage. The output voltage may be stored as energy in two reservoir capacitors 117. In one embodiment, the high voltage shock module 105 draws some of the charge from the two reservoir capacitors 117 when a stimulus is applied to the body. The charge of the two reservoir capacitors 117 may be replenished in between cycles of applying the high voltage shock stimulus. Large surges of current flowing through the ground path are minimized which reduces noise on the power supply lines.

The GPS module 101 is low power with a small foot print. The GPS module 101 may be a two chip solution with supporting circuitry such as RAM, regulators, and communication peripherals (serials, SPI). In one embodiment, the GPS module 101 radio frequency (RF) front end is a double super-heterodyne receiver capable of receiving the microwave L1 band at the carrier frequency of 1575.42 Mhz, with an antenna 109. In one embodiment, the baseband processor targets the Coarse Acquisition (C/A) data code which modulates the L1 carrier with Binary Phase Shift Key (BPSK) method, and supports Wide Area Augmentation System (WAAS)/European Geostationary Navigation Overlay System (EGNOS). The baseband processor can track 16 of the current 24 GPS satellites. The serial data from the module 101 may be automatically corrected for WAAS and EGNOS. These last two systems in the US and Europe provide satellite signals to augment GPS accuracy, availability, and precision. For example, the static accuracy of the GPS module is a Circular Error Probable (CEP) of 1.27 meters (CEP, 50%).

In one embodiment, the antenna 109 is passive, does not require a low noise amplifier (LNA), and is located less than 2 cm from the GPS module 101. The antenna 109 may be a passive patch or helical. Additionally, the antenna 109 may be active path type and coupled to a low noise amplifier, and located several meters away from the GPS module 101. The antenna 109 may be mounted in a position in order to access the full view of the sky to obtain the maximum GPS signal strength (i.e., on the nap of the neck of an animal or on its back).

In one embodiment, the GPS module 101 communicates with the 10 Mhz 8-bit microcontroller 102 via a serial port. After initialization, the 8-bit microcontroller 102 is set to 9,600 bauds, and the GPS module 101 defaults to 9,600 baud rate.

In one embodment, the microcontroller 102 contains in memory 110 a program 111 which sends at a suitable time, a command to the GPS module 101 which increases the baud rate to 38,400, for example. Communication may be via half-duplex protocol. The NMEA messages are transmitted in hex format, and are comma delimited. The microcomputer 102 may contain a Universal Asynchronous Synchronous Receiver Transmitter (USART) module. Under command of the program 111, the USART baud rate is set, and an interrupt routine is activated. Each character in Hex format transmitted from the GPS module 101 causes an interrupt. An interrupt service routine (ISR) acquires the data, validates the NMEA messages or strings by checking for Frame Errors and Checksum, and stores the data composed of strings into various registers. The string is then tested for Checksum. Thereafter, the valid data is parsed using the comma delimeters. For example, the NMEA message $GPGAA may contain the GPS fix data such as cardinal numbers, latitude and longitude.

Further, in one embodiment, the GPS module 101 can receive commands from the program 111 of the 8-bit microcomputer 102 to set the GPS module 101 NMEA 0183 protocol initialization and alter any of its navigational information and control features. This includes serial port parameters, navigation initialization, NMEA message rate control, set Datum, NMEA message sequence, and Almanac data transfer, etc.

Note that although the above apparatus and methods are described as being used in one embodiment of the invention, it would be clear to one of ordinary skill that alterate electronic means, whether existing presently or devised in the future, could achieve the same function.

In one embodiment, the optional LCD 103 is a Hitachi compatible 16x4 dot matrix built with chip-on-glass technology. The LCD 103 is connected to the 8-bit microcontroller 102 via a 4-bit parallel simplex interface. The LCD 103 requires a 5 volt supply, and the command and data signal from the microcomputer 102 to the LCD 103 are level translated 112 from 3 to 5 volts. The bias voltage is derived from the boosted voltage.

In one embodiment, the piezo alarm 104 is a 2 leads piezo transducer interfaced with a driven transistor circuit. A pulse width modulated (PWM) port of the microcomputer 102 drives the piezo alarm 104 at various frequencies and durations under command of the program 111, thereby producing distinct sounds.

In one embodiment, the LED 113 is optionally provided for giving the user a visual indication of various statuses of the apparatus — i.e., turning ON / OFF , battery status indicator, etc.

In one embodiment, the apparatus 100 may be connected to other electronic systems or the Internet and or thru Wireless communication. The communication system can include Infr Red (IR), Ultrasound, Radio Frequency (RF), and microwave. Analog modulation methods such as Amplitude Modulation (AM) or Frequency Modulation (FM) may be used to transmit data. In addition, Digital Modulation methods utilizing Binary Signaling, such as Amplitude Shift Key (ASK) and Frequency Shift Key (FSK) may be also used to transmit data. In addition, Digital Modulation methods utilizing Multilevel Signaling such Quadrature Amplitude Modulation (QAM) can also used for data transmission. Further, Wireless RF and Microwave Protocols which utilize digital modulation methods and are dedicated for Personal Area Networks such as ZigBee, Bluetooth, RFID, and UWB, are also suitable. The Personal Area Networks can be configured as peer-to-peer, for example, a body to a base station, such as a star, mesh, and cluster trees, depending on the available connectivity of the particular network. Furthermore, Wide Area Networks such as WLAN, WiMAX, and Cellular Networks (for example, GSM), CDMA can be implemented. However, it would be clear to one of ordinary skill in the art, that these types of methods are not exhaustive, and other methods, whether presently existing or implemented in the future, would achieve the same function.

Thus, the present invention may be provided as a portable apparatus 100 which is small enough to be attached to the body desired (i.e., animal, person, machinery) without concerns for the wearer with respect to weight, shape or size. The apparatus 100 may be provided with a screen 103 for accessing different functions, or can be provided without an LCD 103 and with discrete buttons for programming.

Accordingly in one embodiment, the apparatus 100 of the present invention utilizes a GPS module 101 to capture location data obtained from GPS signals acquired from the GPS constellation.

Different algorithms can be used to locate a body (i.e., an animal) and determine its location with respect to a particular field.

One method to detect the location of the body can be based on scanning a convex polygonal area every few feet (i.e., similar to that used in "paint" and CAD programs to crop out an area). The GPS data may be recorded at several locations to set up a polygonal barrier region. This approach is not preferable for an 8-bit microcomputer 102 because of the speed required to calculate the location of the body, and more particularly the throughput of the 8-bit microcomputer 102.

In another embodiment, tracking a body and determining its location within a barrier region is performed with the use of a spherical coordinate system derived from the GPS signals. In this embodiment, the user of the apparatus may be required to select the boundary region using a square or rectangular perimeter, and it is used to determine if the body is within a barrier region (i.e., similar to what is used in video games to detect a collision). The user can set the apparatus 100 to store the signal data for the four vertices of each square or rectangle by receiving GPS signal data while the user walks the square or rectangular path of the boundary. The functionality of the apparatus 100 enables the user to set or reset the four vertices of each of the four fields, and visually display the information on the LCD.

The number of square or rectangular areas per barrier region or property is limited only by the size of the memory of the microcomputer and the speed of calculation. In one specific embodiment, 16 vertices for 4 squares or rectangles compose the barrier region. This allows for a variety of possible shapes of the barrier region or regions to be stored in the apparatus, as the squares or rectangles may only be adjacent on one side. This is especially useful in order to obtain the maximum coverage of an irregular shaped property, for example. The algorithm is conceptually taking advantage of the fact of the limited number of times a piece of paper can be folded in half, typically seven times.

Further, although the present invention will describe defining one barrier region, it would be clear to one of ordinary skill in the art that more than one perimeter to set up a plurality of barrier regions of the virtual fence, can be performed.

In a simpler approach in an alternative embodiment, a circular boundary based on the location of the animal can be used.

However, in one embodiment of the present invention, once the four GPS coordinates of each square or rectangle area of the barrier region are set and stored in the apparatus, the body can be fitted with the portable rechargeable apparatus of the present invention (i.e., via a neck collar or any convenient body part for an animal). Thus, the continuous GPS signal data of the body's coordinates is received and analyzed to determine whether the body is inside or outside the barrier region. This GPS signal data, particularly the latitude and longitude, is compared to the stored signal data of the boundary region in the apparatus, to determine whether the body is located within an area. The instantaneous spherical coordinate of the body is compared to the stored spherical coordinates used for demarcation the boundary region.

More specifically, the body is within an area if the latitude which describes the instantaneous location of the body is within the two latitudes which sets the vertices of the barrier region , and similarly for longitude.

Should the body approach the boundary defined by the stored data, the apparatus detects the changing GPS data and determines the body's location relative to the boundary. Further, the apparatus determines the optimal time to apply the type of stimulus, and the strength and duration of each stimulus, by instantaneously monitoring the locational response of the body to the stimulus. For example, should the body cross the protected region, then the apparatus will emit a stimulus to drive the body out of the protected region. The stimulus can consist of compression wave energy, electronic energy, or other stimulus means (i.e. recorded voice commands) or a combination of stimuli to which the body is known to respond.

After the barrier region is set and the body is contained, the tracking data is used by the algorithm to save power, and hence extend the battery life. The algorithm utilizes the location of the body with respect to the vertices or perimeter by calculating the distance using the Haversine formula.

For example, if a small area of approximately 100 ft. x 100 ft. is selected, and if the body is a dog with a speed of about 20 mph, or 30 ft./sec, the dog can easily leave the area. Accordingly, since the speed of the body is known and depending on the distance of the body to the boundary or fence, various sub-circuits may be set to low power mode. Should the body move, based on its GPS bearing and distance to the edge, the sub-circuits are enabled into full power mode.

Another embodiment of the present invention includes an apparatus 100 containing GPS signal data means, radio frequency (RF) transmitter means 114, and receiver/transmitter means 115, all intended to communicate various data formats between the body and a base station receiver operated by the user. For example, this data would include the body's location to a base station with means of visualizing the location of the body; signaling the body to move for any one of a variety of reasons, such as feeding, safety, night-time, day-time, birth, playtime, etc.; sending "go left" or "go right" signals to the body to guide it to a particular location; providing sensors or detectors 116 built into the apparatus to determine information about the body, for example: sitting, standing, birth, death, pulse, temperature, alimentation, speed, or any other parameter, etc.

In one embodiment, operation of the apparatus is as follows.

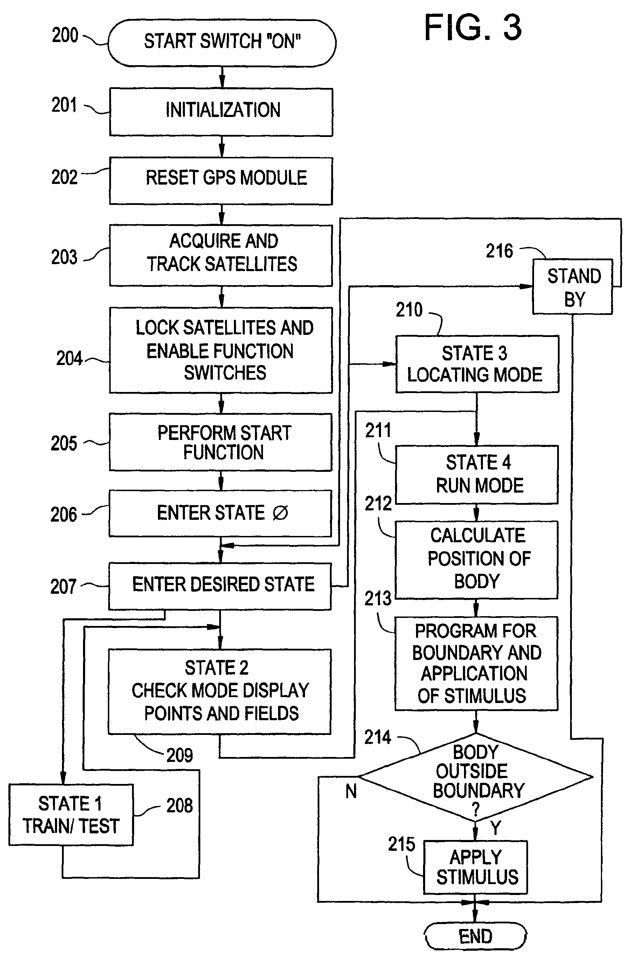

The apparatus 100 would be turned on by the user switching the ON/OFF switch 300 (see FIGS. 2A and 2B) to the ON position in step 200 (see FIG. 3). Upon turning-on the apparatus 100, the program 111 proceeds to reset the 8-bit microcomputer 102 and to initialize the registers in step 201, including the baud rate to 9,600, and all three power supplies 107a-c are enabled.

During the initialization step 201, the four function switches or buttons (301, 302, 303, 304 — further described below) which control the functionality of the apparatus 100 are disabled by the program 111.

After initialization, and after a finite time, the program 111 sends a reset signal to the GPS module 101 in step 202. The program 111 may inform the user to wait, and interfaces with the GPS module 101 serially in step 203, so that the GPS module 101 firmware can acquire the GPS data signal, and track satellites from the GPS constellation. During the acquire and track step 203, the four function switches or buttons (301-304 — further described below), which control the functionality of the apparatus 100, are disabled by the program 111. The Reset butoon 305 clears the LCD screen 103.

The GPS module 101 is capable of locking-on up to 16 satellites. Once at least four satellite signals needed to obtain one coordinate point are locked-on, the functions switches are enabled by the program 111 in step 204.

Note that if there is no previous GPS data stored in the battery backed-up RAM of the microcontroller 102, a Cold Start is initiated by the program 111 in step 205. Thus, the start procedure depends on the validity of previous GPS data.

Specifically, Cold Start is defined as having, for example, invalid almanac, ephemeris, position, and time data in RAM 102. Warm Start is defined, for example, as having outdated ephemeris data in RAM 102. Hot Start, for example, is defined as having a valid ephemeris, almanac, position, and time data. The satellites' locking process by the GPS module 101 requires, for example, an average of 49 seconds for Cold Start, an average of 32 seconds for Warm Start, and an average of 8.5 seconds for Hot Start.

In one embodiment, the program 111 of the present invention is comprised of five STATES. Once the Cold Start, for example, is initiated, the program 111 proceeds to enter STATE0 in step 206. In this step, the GPS module 101 firmware provides the data serially and the program 111 is able to detect one or more satellites, and a location coordinate is provided to the user.

One embodiment of the apparatus 100 of the present invention is shown in FIGS. 2A and 2B, although the configuration can be changed to suit user requirements. There are four switches 301-304 provided on the apparatus 100, which are labeled: Mode 301, Select 302, Configure 303, and Stand-By 304, for example. Each particular switch 301-304 is either active or disabled depending on the STATE and previous switch selected by the user. The user has the option to enter STATE1, STATE2, STATE3, or STATE5, after the program 111 enters STATE0 at step 206.

In step 207, the user can enter the desired STATE, such as STATE 1 for example, in step 208, and the program 111 will allow the user to Train the body or test the functionality of the stimulus to the body. This training or testing includes applying the stimulus to the body if it crosses the virtual fence, for example.

Should the user select to enter STATE2 or the Check Mode, all 16 Vertices (Points) and of the 4 Fields can be displayed by the program 111 in step 209. Specifically, the program 111 only stores valid coordinate points which are defined as based on at least 4 satellites' data to fix one coordinate, for example. Further, to prevent the user from creating a barrier region that is less than allowed by the resolution of the GPS module 101, after the first vertex is set, the program 111 ensures that the second vertex has to be at least 3 meters North, for example. The third vertex would be at least 3 meters East, and the fourth vertex would be at least 3 meters South, for example Furthermore, the Prime Meridian (Greenwich) differentiates the earth into East and West zones.

Should the user select a barrier region that crosses the East and West zones, for example, near London, the program 111 will compensate for the data, and similarly for the North and South demarcation set by the Equator.

Furthermore, for program 111 consistency and user simplicity, the user needs to follow a consistent path to generate the square(s) or rectangular region(s). The path is: "face North", take first vertex reading; proceed North to the second vertex, stop and take the second vertex reading; then proceed East to the third vertex, stop, and take the third vertex reading; and finally proceed South to the fourth vertex, stop, and take the fourth vertex reading. Different paths than "face North" and moving clockwise are possible to program in the system software.

From STATE0 in step 210, the user can enter STATE3 or the Locating Mode, and can set each of the vertices of the 4 fields as stated above. The Select button 302 allows the user to select the vertices of the fields and store the coordinates into memory. The Reset 305 button clears the LCD screen 103.

From STATE2 or STATE3, the user can enter STATE4 or the Run Mode. During the Run Mode, for example, the program 111 in step 211 acquires instantaneously, the GPS data location to locate the body, and determine whether the body is in or out of the field, or near the boundary.

While in STATE4, for example, the program 111 in step 212 calculates the distance between the body being tracked and each of the vertices of a particular field, or the distance to the longitudinal and latitudinal boundary, and based on the preprogrammed speed of the body and the size of the area, programs in step 213 the integrated circuits, sub-circuits, and GPS module 101 can enter into to one of several low power modes and pre-determines a variable wake-up time to acquire, track, and process additional GPS data to determine whether the body is within a barrier region, for example, and to apply any level of stimuli, for example, if not in the barrier region. The basis of the calculation is the Haversine formula.

In one embodiment, the GPS module 101 transmits the data as NMEA 0183 strings or in binary format. The NMEA 0183 latitudinal and longitudinal data is in the form of ddmm.mmm where d and m stands for degrees and minutes, and the program converts the data to dd.dddformat. The degrees are then converted to radians by multiplying with Pi / 180. The distance between 2 spherical coordinates in radians is therefore:

$$Dist1 \quad = \quad \sin(lat1)*\sin(lat2)+\cos(lat1)*\cos(lat2)*\cos(long1-long2) ,$$

$$Distance \ = \ \mathrm{acos}\,(Dist1)$$

where lat and long are latitudes and longitudes of coordinates 1 and 2. The Distance in radians is converted into Nautical Miles by:

$$NM \ = \ Distance \ * \ 3437.7387 ,$$

and further converted to statute miles by:

$$MI \ = \ NM * 1.150779 ,$$

and still further converted to feet by:

$$FEET \ = MI * 5280$$

In addition, the program 111 in step 213 converts the NMEA 0183 latitudinal and longitudinal data in the form of ddmm.mmm into dd.mm.ssss for display on the 16x4 Hitachi compatible dot matrix LCD 103, where d stands for degrees, m for minutes, and s for seconds. Further, in one embodiment, the apparatus 100 can be programmed to run automatically and can display on the LCD 103 whether the body is located within one of the 4 fields, and display its instantaneous location.

If, for example, the body crosses outside the virtual fence, the program 111 then can decide in step 214 whether to apply stimulus (for example, pulsed electric shock) in step 215 to the body. In the present invention for example, three levels of stimulation are possible, depending upon the position of the animal relative to the virtual barrier.

The program 111 is designed to take advantage of the low power mode of the integrated circuits, sub-circuits, including the GPS module 101. The battery lifetime is expended by this algorithm, for example. In one embodiment, the Li Ion battery has to be removed from the apparatus and recharged externally.

Upon entering STATE5, Stand-by 304 (blank mode), the apparatus 100 enters into a low power mode, for example, and the LCD 103 is disabled. The GPS module 101 also is in a low power mode and does not acquire GPS signals.

Finally, the Configure button 303 of the apparatus 100, in one example, acts like a second Select button, so that the user can select STATE2 or STATE3, for example, or can reselect, for example, vertex1 of each field for programming.

Accordingly, the present invention allows a user to keep a body, whether an animal, a person, or machinery/ vehicle, within an invisible fence. The apparatus provides a small footprint, a self-contained unit which is rugged and reliable, with good battery life, which is easy to use and manufacture at a low cost.

It should be emphasized that the above-described embodiments of the invention are merely possible examples of implementations set forth for a clear understanding of the principles of the invention. Variations and modifications may be made to the above-described embodiments of the invention without departing from the spirit and principles of the invention. All such modifications and variations are intended to be included herein within the scope of the invention and protected by the following claims.

**Claims**

1.  An apparatus to track a body within a region, comprising:

    a GPS module which acquires location information on the body; and
    a controller which compares said location information for the body with predetermined information on the region, to determine a position of the body within the region.

2.  The apparatus according to claim 1, further comprising a display which shows the location information in coordinates.

3.  The apparatus according to one of claims 1 to 2, further comprising an audio component.

4.  The apparatus according to one of claims 1 to 3, further comprising a mechanism for producing a stimulus.

5.  The apparatus according to claim 4, wherein said mechanism comprises:

    a high voltage shock module; and
    at least one electrode.

6.  The apparatus of one of claims 4 to 5, wherein said stimulus is at least one of a compression wave energy, electronic energy, and audio signal.

7.  The apparatus according to one of claims 1 to 6, further comprising a rechargeable battery.

8.  The apparatus according to one of claims 1 to 7, further comprising at least one power supply.

9.  The apparatus according to one of claims 1 to 8, further comprising:

    means for keeping the body within the region.

10. The apparatus according to one of claims 1 to 9, further comprising an LED which shows a status of the apparatus.

11. The apparatus according to one of claims 1 to 10, further comprising communication connections from at least one of internet and wireless.

12. The apparatus according to one of claims 1 to 11, wherein tracking of the body is performed using a spherical coordinate system derived from GPS signals from said GPS module.

13. The apparatus according to claim 12, wherein the region is determined by using an algorithm which utilizes one of a square and a rectangular perimeter, and storing said GPS signals for four vertices of each one of said square and said rectangle.

14. The apparatus according to one of claims 1 to 13, wherein tracking of the body is performed using one of a circular and square boundary.

15. The apparatus according to one of claims 1 to 14, wherein said GPS module receives continuous signal data to analyze whether the body is within the region.

16. The apparatus according to claim 15, wherein a latitude and a longitude from GPS signals from said GPS module is compared with stored signal data of the region, to determine whether the body is within the region.

17. The apparatus according to claim 16, wherein the body is determined to be within a region when said latitude which describes an instantaneous location of the body is within two latitudes which set the vertices of the region.

**18.** The apparatus according to one of claims 16 to 17, wherein the body is determined to be within a region when said longitude which describes an instantaneous location of the body is within two longitudes which set the vertices of the region.

**19.** The apparatus according to claim 4, wherein said controller determines an optimal time to apply said stimulus.

**20.** The apparatus according to claim 19, wherein said controller determines a strength and duration of said stimulus.

**21.** The apparatus according to one of claims I to 20, further comprising:

RF transmitter means; and
receiver/transmitter means.

**22.** The apparatus according to one of claims 1 to 21, wherein the GPS module can be woken up from low power mode using a variable wake-up time, in order to acquire, track and process said GPS signals.

**23.** A method of tracking a body within a region, comprising:

acquiring a plurality of GPS data signals using a GPS module;
obtaining coordinate points from said GPS data signals;
determining a region based on said coordinate points;
acquiring instantaneous GPS data signals on the body; and
determining from a comparison of the body's GPS data signals and the region's coordinate points, whether the body is within the region.

**24.** The method according to claim 23, wherein acquiring said plurality of GPS data signals requires locking onto a plurality of satellite signals.

**25.** The method according to one of claims 23 to 24, further comprising:

storing said coordinate points from said plurality of GPS signals, in a memory.

**26.** The method according to one of claims 23 to 25, further comprising:

applying a stimulus to the body when the body is determined to not be within the region.

**27.** The method according to one of claims 23 to 26, wherein said coordinates can not be less than a resolution of said GPS module.

**28.** The method according to one of claims 23 to 27, wherein the determining step comprises a user following a consistent path to generate at least one of a square and a rectangular region having four vertices each.

**29.** The method according to claim 28, further comprising:

calculating a distance between the body being tracked and each of the vertices of a region, to determine whether the body is within a region.

**30.** The method according to claim 29, wherein a latitude and a longitude from GPS signals from said GPS module is compared with stored signal data of the region, to determine whether the body is within the region.

**31.** The method according to one of claims 29 to 30, wherein the body is determined to be within a region when said latitude which describes an instantaneous location of the body is within two latitudes which set the vertices of the region.

**32.** The method according to one of claims 29 to 31, wherein the body is determined to be within a region when said longitude which describes an instantaneous location of the body is within two longitudes which set the vertices of the region.

**33.** The method according to one of claims 23 to 32, wherein the GPS module can be woken up from low power mode using a variable wake-up time, in order to acquire, track and process said GPS signals.

# FIG. 1

# FIG. 2A

# FIG. 2B

FIG. 3

200 — START SWITCH "ON"

201 — INITIALIZATION

202 — RESET GPS MODULE

203 — ACQUIRE AND TRACK SATELLITES

204 — LOCK SATELLITES AND ENABLE FUNCTION SWITCHES

205 — PERFORM START FUNCTION

206 — ENTER STATE ∅

207 — ENTER DESIRED STATE

STATE 2 CHECK MODE DISPLAY POINTS AND FIELDS — 209

STATE 1 TRAIN/ TEST — 208

216 — STAND BY

210 — STATE 3 LOCATING MODE

211 — STATE 4 RUN MODE

212 — CALCULATE POSITION OF BODY

213 — PROGRAM FOR BOUNDARY AND APPLICATION OF STIMULUS

214 — BODY OUTSIDE BOUNDARY ?
N      Y

215 — APPLY STIMULUS

END

14

**European Patent Office**

## EUROPEAN SEARCH REPORT

Application Number

EP 05 01 9126

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 271 757 B1 (TOUCHTON SCOTT F ET AL) 7 August 2001 (2001-08-07) * abstract * * column 1, line 64 - column 3, line 60 * ----- | 1-33 | G01S5/14 A01K15/02 |
| X | US 5 868 100 A (MARSH ET AL) 9 February 1999 (1999-02-09) * abstract * * column 2, line 30 - line 49 * * column 3, line 23 - line 46 * * column 5, line 17 - line 31 * ----- | 1-33 | |
| X | US 5 949 350 A (GIRARD ET AL) 7 September 1999 (1999-09-07) * abstract * * column 6, line 25 - column 9, line 5 * ----- | 1-33 | |
| | | | TECHNICAL FIELDS SEARCHED (IPC) G01S |

The present search report has been drawn up for all claims

| Place of search | Date of completion of the search | Examiner |
|---|---|---|
| Munich | 5 December 2005 | Dollinger, F |

EPO FORM 1503 03.82 (P04C01)

**EP 1 632 787 A1**

## ANNEX TO THE EUROPEAN SEARCH REPORT
## ON EUROPEAN PATENT APPLICATION NO.

EP 05 01 9126

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2005

| Patent document cited in search report | | Publication date | Patent family member(s) | | Publication date |
|---|---|---|---|---|---|
| US 6271757 | B1 | 07-08-2001 | AU | 748976 B2 | 13-06-2002 |
| | | | AU | 1930999 A | 12-07-1999 |
| | | | CA | 2315804 A1 | 01-07-1999 |
| | | | GB | 2348333 A | 27-09-2000 |
| | | | WO | 9933039 A1 | 01-07-1999 |
| | | | US | 6043748 A | 28-03-2000 |
| US 5868100 | A | 09-02-1999 | AU | 722090 B2 | 20-07-2000 |
| | | | AU | 3650297 A | 02-02-1998 |
| | | | NZ | 333654 A | 28-07-2000 |
| | | | WO | 9801023 A2 | 15-01-1998 |
| US 5949350 | A | 07-09-1999 | NONE | | |

EPO FORM P0459

For more details about this annex : see Official Journal of the European Patent Office, No. 12/82